**Europäisches Patentamt**

**European Patent Office**

**Office européen des brevets**

(19)

(11) Veröffentlichungsnummer : **0 362 200 B1**

(12) # EUROPÄISCHE PATENTSCHRIFT

(45) Veröffentlichungstag der Patentschrift :
**18.12.91 Patentblatt 91/51**

(51) Int. Cl.$^5$ : **B65G 47/90, B23Q 7/04,
B25J 15/10**

(21) Anmeldenummer : **87907420.1**

(22) Anmeldetag : **20.11.87**

(86) Internationale Anmeldenummer :
**PCT/DE87/00531**

(87) Internationale Veröffentlichungsnummer :
**WO 88/07492 06.10.88 Gazette 88/22**

(54) **LINEAREINHEIT ZUM UMSETZEN VON GEGENSTÄNDEN.**

(30) Priorität : **30.03.87 DE 3710479**

(43) Veröffentlichungstag der Anmeldung :
**11.04.90 Patentblatt 90/15**

(45) Bekanntmachung des Hinweises auf die
Patenterteilung :
**18.12.91 Patentblatt 91/51**

(84) Benannte Vertragsstaaten :
**AT CH DE FR GB IT LI**

(56) Entgegenhaltungen :
**CH-A- 426 637
DE-A- 1 945 595
FR-A- 1 155 591
US-A- 4 030 614
Patent Abstracts of Japan, Band 3, Nr. 16
(M-48), 10. Februar 1979**

(73) Patentinhaber : **ROBERT BOSCH GmbH
Postfach 10 60 50
W-7000 Stuttgart 10 (DE)**

(72) Erfinder : **LANGENBACHER, Markus
G.-F.-Händel-Str. 12
W-7014 Kornwestheim (DE)**
Erfinder : **ROTHFUSS, Peter
J.-S.-Bach-Str. 6/1
W-7257 Ditzingen 5 (DE)**
Erfinder : **MAIER, Gernot
Im Geiger 81
W-7000 Stuttgart 50 (DE)**

EP 0 362 200 B1

## Beschreibung

### Stand der Technik

Die Erfindung geht aus von einer Lineareinheit zum Umsetzen von Gegenständen, insbesondere von Werkstücken bzw. Werkstückträgern auf Montage- oder Fertigungsbändern, der im Oberbegriff des Anspruchs 1 genannten Gattung. Solche Lineareinheiten dienen beispielsweise dazu, Werkstücke bzw. Werkstückträger von einer linearen Förderstrecke, z.B. einem Förderband abzuheben und auf eine andere Linearförderstrecke umzusetzen oder in eine Bearbeitungsstation zu überführen. Bei einem bekannten Linearförderer der gattungsmäßen Art (CH-A-426 637) wird zum Hervorrufen der vertikalen Greiferbewegungen der gesamte zweite Schlittenteil in vertikaler Richtung auf- und abbewegt. Diese Anordnung ist ungünstig, wenn der zweite Schlittenteil eine große Masse hat, die eine entsprechend hohe Antriebsleistung auch für die Hubbewegungen benötigt, wobei auch die dafür vorgesehenen Getriebeelemente entsprechend hoch beansprucht werden. Bei der bekannten Anordnung ist ferner zum horizontalen Bewegen der Greifer ein über mehrere Gelenkstellen führendes Hebel- und Stangengetriebe vorgesehen, welches aufwendig und spielbehaftet ist und sich deshalb für eine Anordnung mit mehreren Greifern, wie sie beispielsweise zum Umsetzen von plattenförmigen Werkstücken bzw. Werkstückträgern erforderlich ist, nicht eignet.

### Vorteile der Erfindung

Die erfindungsgemäße Anordnung mit den kennzeichnenden Merkmalen des Anspruchs 1 zeichnet sich durch einen einfachen und kompakten Aufbau aus, bei welchem auch mehrere Greifer entsprechend dem Umrißprofil der zu erfassenden Gegenstände an gegeneinander versetzten Stellen angebracht und jeweils mit gleich - oder ähnlich gestalteten kompakten Getriebeelementen versehen werden können. Die einzelnen Phasen des Bewegungsablaufes brauchen nicht auf die Größe der jeweils umzusetzenden Gegenstände abgestimmt werden. Unabhängig von ihrer Größe werden die Werkstücke mit gleicher Greiferkraft gehalten. Bei der erfindungsgemäßen Lineareinheit ist somit die Greiftechnik unabhängig von der Gegenstandsgröße, wobei selbstverständlich die maximale Größe der zu ergreifenden Gegenstände durch die Abstände der vertikalen Greifarme voneinander festgelegt ist.

Bei Vorsehen von vier, in gleichen Abständen voneinander angeordneten vertikalen Greifarmen ist eine Zuführung bzw. Abführung des umzusetzenden oder zu ergreifenden Gegenstandes von allen Seiten der Lineareinheit möglich.

Durch die in den Unteransprüchen aufgeführten Maßnahmen sind vorteilhafte Weiterbildungen der Anordnung gemäß Anspruch 1 möglich.

Besonders vorteilhaft ist es, wenn gemäß Anspruch 5 die axiale Länge der Steilgewindeverbindung etwas kleiner als der Überhub des ersten Schlittenteils bemessen ist. Durch diese Maßnahme wird am ende des Bewegungsablaufes den kraftschlüssig an dem umzusetzenden Gegenstand anliegenden Greiffingern eine zusätzlich erhöhte Greifkraft verliehen, die einen sicheren Halt des gegriffenen Gegenstandes beim Verfahren der Schlitten gewährleistet. Durch das ende der Steilgewindeverbindung wird dabei die Hubbewegung der Greiffinger begrenzt und der verbleibende geringe Restüberhub erzwingt eine Drehung der Greifarme und damit ein erhöhte Ann pressen der Greiffinger an den bereits gegriffenen und angehobenen Gegenstand.

Die Erfindung ist anhand eines in der Zeichnung dargestellten Ausführungsbeispiels in der nachfolgenden Beschreibung näher erläutert. Es zeigen:

Fig. 1 eine Seitenansicht einer Fördereinrichtung mit zwei Förderbändern und einer Lineareinheit zum Umsetzen von Werkstücken von dem einen auf das andere Förderband,

Fig. 2 einen Schnitt der Lineareinheit gemäß Linie II-II in Fig. 1,

Fig. 3 eine Explosionszeichnung eines Greifers der Lineareinheit in Fig. 1 und 2 in perspektivischer Darstellung.

### Beschreibung des Ausführungsbeispiels

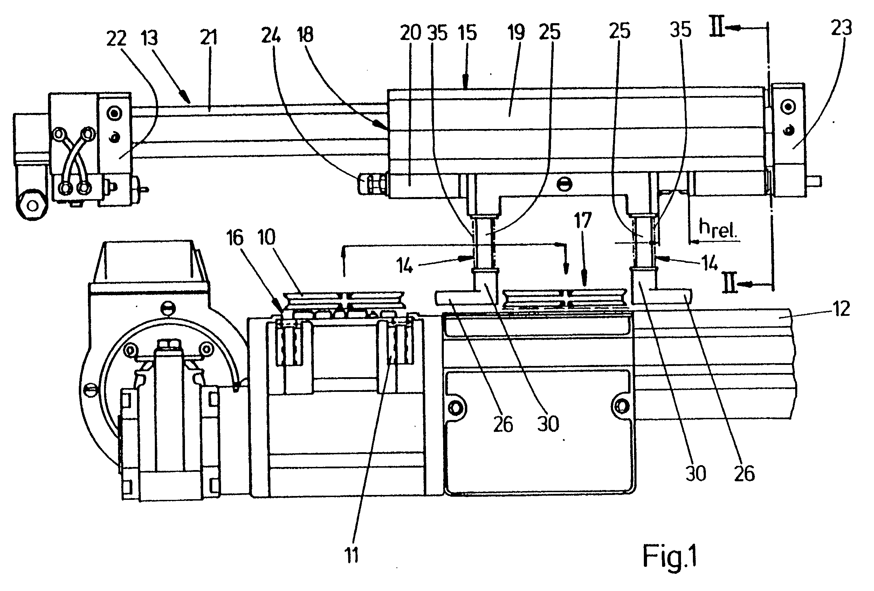

Die in Fig. 1 in Seitenansicht zu sehende Fördereinrichtung für mit 10 bezeichnete Werkstücke weist zwei Linearförderstrecken in Form von zwei Doppelgurt-Förderbändern 11,12 auf, die senkrecht zueinander vertaufen. Zum Umsetzen der Werkstücke 10 von dem einen Förderband 11 auf das andere Förderband 12 ist eine Lineareinheit 13 vorgesehen, welche eine Greiferanordnung, bestehend aus vier paarweise spiegelbildlich ausgebildeten Greifern 14, und einen längsverschiebbaren Greiferträger 15 aufweist, der zwischen einer Aufnahmeposition 16 und einer Abgabeposition 17 verfahrbar ist.

Der Greiferträger 15 ist als längsverschiebbarer Schlitten 18 ausgebildet, der aus einem Oberschlitten 19 und aus einem Unterschlitten 20 besteht, die gleiche Längenabmessungen aufweisen. Der Oberschlitten 19 ist auf zwei Gleitstangen 21 längsverschieblich geführt und zur Verschiebebewegung angetrieben. Die Verschiebebewegung wird durch zwei Endanschläge 22 und 23 begrenzt, die sich sowohl über die vertikale Stirnabmessung des Oberschlittens 19 als auch über die vertikale Stirnabmessung des Unterschlittens 20 erstrecken. Der Unterschlitten 20 trägt auf seiner dem Endanschlag 22 zugekehrten Stirnseite ein Distanzstück 24. Oberschlitten 19 und Unterschlitten 20 sind relativ zueinander verschiebbar, wobei der maximale Verschiebeweg $h_{rel}$ der beiden Schlitten 19,20 zueinander, bzw. der Überhub $h_{rel}$ des Oberschlittens 19 zum Unterschlitten 20, durch die Länge des Distanzstückes 24 festgelegt ist. Durch diesen Überhub $h_{rel}$ wird der Bewegungsablauf der Greifer 14 zum Aufnehmen eines Werkstückes 10 in der Aufnahmeposition 16 und zum Absetzen des Werkstücks 10 in der Abgabeposition 17 jeweils nach Erreichen der Aufnahme- und Abgabeposition 16,17 erzwungen.

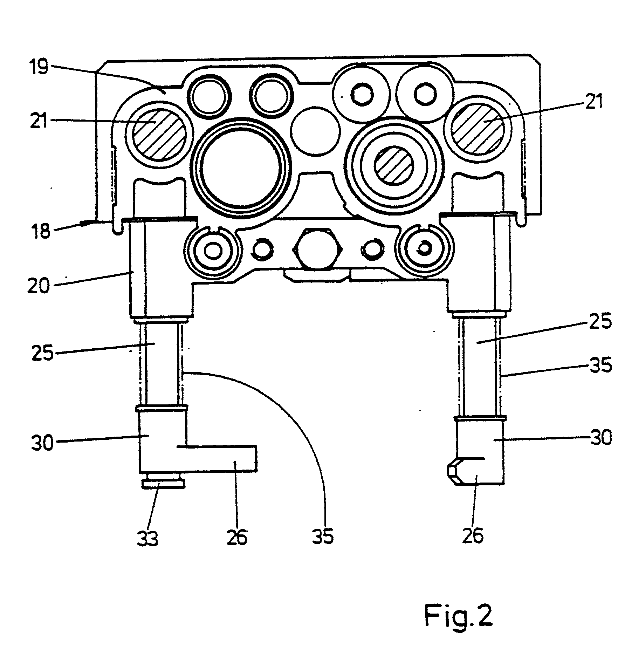

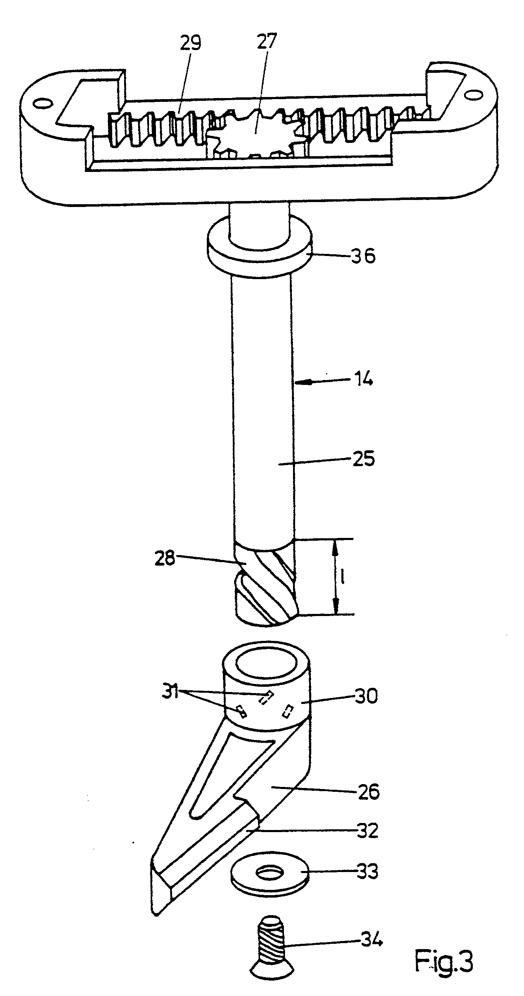

Jeder Greifer 14 weist einen im Unterschlitten 20 mit einem Bund 36 drehbar gelagerten vertikalen Greifarm 25 und einen auf dem Greifarm 25 schwenkbeweglichen Greiffinger 26 auf. Wie in Fig. 3 anschaulich dargestellt ist, trägt der Greifarm 25 an seinem einen Ende einstückig ein Zahnritzel 27 und ist am anderen Ende mit einer Wendel 28 versehen, die eine definierte axiale Länge 1 aufweist. Das Zahnritzel 27 kämmt mit einem. Zahnstangenabschnitt 29, der im Oberschlitten 19 befestigt ist. Der Oberschlitten 19 trägt damit insgesamt vier Zahnstangenabschnitte 29, die jeweils auf einer solchen Seite des zugeordneten Zahnritzels 27 angeordnet sind, das bei Relativverschiebung des Oberschlittens 19 in die eine Verschieberichtung eine dadurch hervorgerufene Drehbewegung der Greifarme 25 die Greiffinger 26 in einer Zustellbewegung für das Werkstück 10 aufeinander zuschwenkt und bei Verschiebung des Oberschlittens 19 relativ zum Unterschlitten 20 in die entgegengesetzte Richtung, die dadurch hervorgerufene inverse Drehrichtung der Greifarme 25 die Greiffinger 26 in einer Öffnungsbewegung für das Werkstück 10 voneinander wegschwenkt. Der rechtwinklig von dem Greifarm 25 wegstehende Greiffinger 26 weist eine mit dem Greifarm 25 koaxiale Muffe 30 auf, welche die Wendel 28 übergreift. Die Wendel 28 ist dreigängig ausgebildet, und die Innenwand der hohlzylindrischen Muffe 30 trägt entsprechend drei am Umfang gegeneinander versetzte Gleitnocken 31, von denen jeweils einer in einen Wendelgang der Wendel 28 eingreift. Am vorderen Ende trägt der Greiffinger 26 eine Greiffläche 32, mit welcher der Greiffinger 26 sich an das zu fassende Werkstück 10 anlegt. Auf der die Wendel 28 begrenzenden Stirnseite des Greifarms 25 ist eine Anschlagscheibe 33 z.B. mit einer Senkschraube 34 befestigt. Eine Schraubendruckfeder 35 ist auf den Greifarm 25 aufgeschoben und stützt sich einerseits, an der Muffe 30 des Greiffingers 26 und andererseits am Unterschlitten 20 ab, so daß der Greiffinger 26 stets in Richtung der Anschlagscheibe 33 belastet ist. Bei geöffneter Greiferanordnung, also nicht gegriffenem Werkstück 10, liegt jeder Greiffinger 26 auf jedem Greifarm 25 an der Anschlagscheibe 33 an (Fig. 1 und 2).

Der durch den Überhub $h_{rel}$ des Oberschlittens 19 relativ zum Unterschlitten 20 in der Aufnahmeposition 16 und in der Abgabeposition 17 des Schlittens 18 erzwungene Bewegungsablauf der Greifer 14 gliedert sich aufgrund des Zahnstangen-Zahnritzel-Getriebes 27,29 zwischen Oberschlitten 19 und Greifarme 25 und infolge der Wendel-Gleitnocken-Verbindung 28,31 zwischen Greifarme 25 und Greiffinger 26 in eine horizontale Schwenkbewegung und eine vertikale Verschiebebewegung aller Greiffinger 26. In der Aufnahmeposition 16 wird dabei die horizontale Schwenkbewegung von der vertikalen Verschiebebewegung gefolgt, während in der Abgabeposition 17 die Greiffinger 26 zunächst eine vertikale Verschiebebewegung und dann eine horizontale Schwenkbewegung ausführen. In der Aufnahmeposition 16, in welcher das Werkstück 10 gegriffen wird, ist dabei die horizontale Schwenkbewegung der Greiffinger 26 eine auf das Werkstück 10 gerichtete Zustellbewegung und die vertikale Verschiebebewegung eine das Werkstück 10 anhebende Hubbewegung, während in der Abgabeposition 17 die vertikale Verschiebebewegung der Greiffinger 26 eine Senkbewegung und die horizontale Schwenkbewegung eine vom Werkstück 10 weggerichtete Öffnungsbewegung ist. Die axiale Länge 1 der Wendel 28 ist dabei etwas kleiner bemessen als der Überhub $h_{rel}$ des Oberschlittens 19 relativ zum Unterschlitten 20. Dadurch wird die Hubbewegung der Greiffinger 26 geringfügig früher beendet als die durch die Zahnstangenabschnitte 29 und die Zahnritzel 27 bewirkte Drehung der Greifarme 25. In diesem verbleibenden Resthub werden somit die nach Ende der Hubbewegung auf den Greifarmen 25 festgesetzten Greiffinger 26 geringfügig weiter in Richtung auf das Werkstück 10 gedreht. Da die Greifflächen 32 aller Greiffinger 26 aber bereits kraftschlüssig an dem Werkstück 10 anliegen, wird durch diese Drehbewegung der Greifarme 25 die Anpreßkraft der Greiffinger 26 an das Werkstück 10 erhöht, so daß ein zuverlässiger Halt des Werkstücks 10 in der aus den vier Greifern 14 gebildeten Greiferanordnung beim Verfahren des Schlittens 18 sichergestellt ist.

Die Wirkungsweise der Lineareinheit beim Umsetzen eines Werkstücks 10 ist wie folgt:

Das Werkstück 10 wird mit dem Doppelgurt-Förderband 11 in die Aufnahmeposition 16 der Lineareinheit 13 gebracht. Der Schlitten 18 wird in Fig. 1 nach links bis zum Endanschlag 22 verschoben. Hier stößt der Unterschlitten 20 mit seinem Distanzstück 24 an dem Endanschlag 22 an und wird in seiner Bewegung blockiert. Der Oberschlitten 19 bewegt sich weiter, bis er ebenfalls an dem Endanschlag 22 anliegt, wobei er den Überhub

$h_{rel}$ zurücklegt. Durch diesen Überhub $h_{rel}$ werden über die Zahnstangenabschnitte 29 und die Zahnritzel 27 alle Greifarme 25 gedreht (der in Fig. 3 dargestellte Greifarm 25 führt dabei eine Drehung entgegen Uhrzeigersinn aus). Durch diese Drehbewegungen der Greifarme 25 werden alle Greiffinger 26 auf das Werkstück 10 zugeschwenkt, bis ihre Greifflächen 32 an dem Werkstück 10 anliegen. Damit ist die horizontale Schwenkbewegung der Greiffinger 26 blockiert, und die weitere Drehbewegung der Greifarme 25 führt über die Wendel 28 und den in diesen gleitenden Gleitnocken 31 zu einer Hubbewegung der Greiffinger 26, wodurch das mit den Greifflächen 32 gehaltene Werkstück vom Förerband 11 vertikal abgehoben wird. Am Ende der Wendel 28 erfolgt - wie vorstehend beschrieben - durch eine geringe Restdrehung der Greifarme 25 eine weitere Zustellbewegung der Greiffinger 26 in Richtung des Werkstücks 10, so daß die Haltekraft, mit welcher das Werkstück 10 von der Greiferanordnung gehalten wird, sich erhöht. In Fig. 2 ist der Greiffinger 26 des rechten Greifarms 25 während seiner Zustellbewegung auf das Werkstück 10 hin dargestellt, während der Greiffinger 26 des linken Greifarms 25 nach Ende seiner Hubbewegung zu sehen ist. Bei der Hubbewegung des Greiffingers 26 wird die Schraubendruckfeder 35 zusammengedrückt.

Nunmehr wird der Schlitten 18 durch Antrieb des Oberschlittens 19 in die in Fig. 1 rechte Abgabeposition 17 verfahren. In der Abgabeposition 17 stößt der um den Überhub $h_{rel}$ über die Stirnseite des Oberschlittens 19 vorstehende Unterschlitten 20 mit seiner Stirnseite an dem Endanschlag 23 an und wird in seiner Verschiebebewegung blockiert, während der Oberschlitten 19 sich noch um den Überhub $h_{rel}$ bis zum Endanschlag 23 bewegen kann. Durch diese Relativbewegung des Oberschlittens 19 zu dem feststehenden Unterschlitten 20 werden wiederum sämtliche Greifarme 25 gedreht. Dabei wird zunächst die überhöhte Greifkraft reduziert, dann eine Senkbewegung der Greiffinger 26 durchgeführt bis die Greiffinger 26 unter der Wirkung der Schraubendruckfedern 25 an den Anschlagscheiben 33 am Ende der Greifarme 25 anliegen. Damit sind die Greiffinger 26 starr mit den Greifarmen 25 verbunden und die weitere Drehbewegung der Greifarme 25 bewirkt ein horizontales Verschwenken der Greiffinger 26, wobei sich die Greifflächen 32 von dem Werkstück 10 wegbewegen. Am Ende der Drehbewegung der Greifarme 25 nehmen die Greiffinger 26 die in Fig. 1 zu sehende Stellung ein. Das Werkstück 10 ist auf dem Förderband 12 abgesetzt und wird von diesem von der Abgabeposition 17 wegtransportiert. Der beschriebene Vorgang wiederholt sich bei jedem erneuten Umsetzen eines Werkstücks 10.

Die Erfindung ist nicht auf das beschriebene Ausführungsbeispiel beschränkt. So kann das Distanzstück 24 zur Festlegung des Überhubs des Oberschlittens 19 auch an dem Endanschlag 22 angeordnet sein. Auch können die Wendel 28 auf dem Greifarm 25 und die in dieser gleitenden Gleitnocken 31 auf der Innenwand der Muffe 30 örtlich vertauscht werden.

Bei einer bevorzugten Ausführungsform sind nur dem die Greifer 14 tragenden Unterschlitten 20 Endanschläge 22, 23, 24 zugeordnet und der Unterschlitten 20 ist zwischen axialen Anschlag schultern des angetriebenen Oberschlittens 18 um ein dem herhub $h_{rel}$ entsprechendes Maß al Oberschlitten 18 verschiebbar gelagert. Das hat den Vorteil, daß der Überhub $h_{rel}$ eine von der Einjustierung der Aufnahme- und Abgabeposition des Unterschlittens 20 unabhängige feste Größe ist und die erfaßten Werkstücke bzw. Werkstückträger jeweils mit der gleichen Anpreßkraft der Greiffinger 26 festgehalten werden.

Wenn der allein von der Schraubendruckfeder 35 in Verbindung mit dem Wendeltrieb 28, 31 hervorgerufene Kraftschluß zwischen Greiffinger 26 und Werkstück bzw. Werkstückträger ausreichen groß ist, kann die Wendel 28 so lang bemessen werden, daß am Ende der Relativbewegung zwischen den beiden Schlittenteilen 18, 20 noch freie Wendellänge zur Verfügung steht. In diesem Fall können auch Werkstücke bzw. Werkstückträger, deren Abmessungen innerhalb gewisser Grenzen voneinander abweichen, erfaßt und umgesetzt werden. Bei einem großen Werkstück wird zwar eine geringere Drehbewegung der Greifarme bis zum Anschlag der Greiffinger an dem Gegenstand erforderlich sein als bei kleinen Gegenständen. Die durch das Zahnstangen-Zahnritzel-Getriebe erzwungene Restdrehung der Greifarme wird jedoch jeweils in eine Hubbewegung der Greiffinger umgesetzt, so daß größere Werkstücke entsprechend weiter angehoben werden als kleinere Werkstücke.

Das beschriebene Ausführungsbeispiel kann nur in der einen Endposition des Schlittens 19, 20 aufnehmen und in der anderen Endposition abgeben. Die Anordnung kann jedoch vorteilhaft auch so getroffen sein, daß in beiden Endpositionen ein Aufnehmen und Abgeben möglich ist, d.h., daß in beiden Richtungen gefördert werden kann. Zu diesem Zweck sind Mittel, z.B. ein zweiter pneumatischer Antrieb, vorzusehen, die in jeder Endposition den Unterschlitten 20 gegenüber dem unbewegten Oberschlitten 19 um den Überhub $h_{rel}$ verschieben.

## Patentansprüche

1. Lineareinheit zum Umsetzen von Gegenständen, insbesondere von Werkstücken auf Montage- oder Fertigungsbändern, mit einem zwischen einer Aufnahme- und einer Abgabeposition verfahrbaren ersten Schlittenteil (19), einem am ersten Schlittenteil (19) verschiebbar gelagerten, durch Reibungsschluß mit diesem gekoppelten zweiten Schlittenteil (20), in welchem zum Erfassen der umzusetzenden Gegenstände dienende Greifer (14) um vertikale Achsen drehbar gelagert sind, ferner mit in die Bewegungsbahn des zweiten Schlittenteils (20) hineinragenden Anschlägen (22, 23, 24), welche die Bewegungsbahn des zweiten Schlittenteiles (20) gegenüber jener des ersten Schlittenteils (19) verkürzen und jeweils eine Relativbewegung (h$_{rel}$) des zweiten Schlittenteils (20) gegenüber dem ersten Schlittenteil (19) erzwingen, wenn dieser in die Aufnahme- bzw. Abgabeposition einläuft, und ferner mit einem Getriebe (27, 28, 29, 30), welches die Relativbewegungen (h$_{rel}$) der beiden Schlittenteile (19, 20) über Zahnritzel (27) in eine horizontale Schwenkbewegung und über Hubelemente (28) in eine vertikale Verschiebebewegung der Greifer (14) umsetzt, dadurch gekennzeichnet, daß die Zahnritzel (27) an vertikalen Greifarmen (25) befestigt sind und zum Hervorrufen der horizontalen Schwenkbewegungen (Zustell- und Öffnungsbewegungen) mit am ersten Schlittenteil (19) angeordneten Zahnstangen (29) kämmen und daß ferner die vertikalen Verschiebebewegungen (Anhebe- und Absetzbewegungen) der Greifer (14) durch eine Steilgewindeverbindung (28, 31) zwischen Greifarm (25) und einem auf diesem drehbar gelagerten, in das Steilgewinde (28) eingreifenden Greiffinger (26) bewirkt sind.

2. Lineareinheit nach Anspruch 1, dadurch gekennzeichnet, daß am freien Ende des Greifarms (25) ein Hubanschlag (33) angeordnet ist, an welchem der Greiffinger (26) unter der Federkraft einer entgegen Hubrichtung wirkenden Rückstellfeder (35) anliegt und daß ferner die Steigungsrichtung des Steilgewindes (28) so gewählt ist, daß das von der Rückstellfeder (35) in Zusammenwirken mit dem Steilgewinde (28) am Greiffinger (26) hervorgerufene Drehmoment im Sinn einer den Greiffinger (26) vom zu erfassenden Gegenstand weg schwenkenden Relativbewegung (Öffnungsbewegung) gegenüber dem Greifarm (25) wirkt.

3. Lineareinheit nach Anspruch 2, dadurch gekennzeichnet, daß die Rückstellfeder als Schraubendruckfeder (35) ausgebildet ist, die auf dem Greifarm (25) sitzt und sich einerseits am Greiffinger (26) und andererseits am zweiten Schlittenteil (20) abstützt.

4. Lineareinheit nach einem der Ansprüche 1 bis 3, dadurch gekennzeichnet, daß die Steilgewindeverbindung aus einer auf dem Greifarm (25) angeordneten mehrgängigen Wendel (28) und einer der Gangzahl der Wendel (28) entsprechenden Anzahl von in der Wendel (28) geführten Gleitnocken (31) im Greiffinger (26) oder umgekehrt besteht.

5. Lineareinheit nach einem der Ansprüche 1 bis 4, dadurch gekennzeichnet, daß die axiale Länge (1) der Steilgewindeverbindung (28, 31) etwas kleiner als der Überhub (h$_{rel}$) des ersten Schlittenteils (19) bemessen ist.

6. Lineareinheit nach einem der vorhergehenden Ansprüche, dadurch gekennzeichnet, daß die Aufnahme- und Abgabeposition (16) des Greiferträgers (15) durch jeweils einen die Schlittenverschiebung begrenzenden Endanschlag (22, 23) festgelegt sind, der sich über eine Stirnabmessung sowohl des ersten als auch des zweiten Schlittenteils (19, 20) erstreckt, daß die beiden Schlittenteile (19, 20) in Verschieberichtung gleiche Abmessungen aufweisen und daß auf der Stirnseite des zweiten Schlittenteils (20) oder auf dem dieser Stirnseite zugekehrten Endanschlag (22) ein in Schlittenverschieberichtung sich erstreckendes Distanzstück (24) mit einer die Relativbewegung (h$_{rel}$) der Schlittenteile (19, 20) festlegenden Länge angeordnet ist.

## Claims

1. Linear unit for transferring articles, in particular workpieces on assembly or production belts, having a first carriage part (19) which can be run between a pick-up position and a depositing position, a second carriage part (20) which is mounted displaceably on the first carriage part (19), is coupled to the latter by frictional connection and in which grippers (14), serving for grasping the articles to be transferred, are mounted rotatably about vertical axes, furthermore having stops (22, 23, 24) protruding into the path of movement of the second carriage part (20), which stops shorten the path of movement of the second carriage part (20) in comparison with that of the first carriage part (19) and in each case enforce a relative movement (h$_{rel}$ of the second carriage part (20) in relation to the first carriage part (19) when the latter runs into the pick-up or depositing position, and furthermore having a gear mechanism (27, 28, 30), which converts the relative movements (h$_{rel}$) of the two carriage parts (19, 20) by means of pinions (27) into a horizontal swivelling movement and by means of lifting elements (28) into a vertical displacing movement of the grippers (14), characterised in that the pinions (27) are fastened to vertical gripping arms (25) and, to bring about the horizontal swivelling movements (closing and opening movements), mesh with racks (29) arranged on the first carriage part (19) and in that furthermore the vertical displacing movements (raising and setting down movements) of the grippers (14) are brought about by a coarse-thread connection (28, 31) between gripping arm (25) and a gripping finger (26) rotatably mounted on the latter and engaging in the coarse-thread (28).

2. Linear unit according to Claim 1, characterised in that at the free end of the gripping arm (25) there is arranged a travel stop (33) against which the gripping finger (26) bears under the spring force of a restoring spring (35) acting against the lifting direction and in that furthermore the direction of pitch of the coarse-thread (28) is chosen such that the torque brought about on the gripping finger (26) by the restoring spring (35) in interaction with the coarse-thread (28) acts in the sense of a relative movement with respect to the gripping arm (25), swivelling the gripping finger (26) away from the article to be grasped (opening movement).

3. Linear unit according to Claim 2, characterised in that the restoring spring is designed as a helical compression spring (35), which is seated on the gripping arm (25) and supports itself on the one hand against the gripping finger (26) and on the other hand against the second carriage part (20).

4. Linear unit according to one of Claims 1 to 3, characterised in that the coarse-thread connection comprises a multi-threaded helix (28) arranged on the gripping arm (25) and a number, corresponding to the number of threads per unit length of the helix (28), of sliding cams (31) in the gripping finger (26), guided in the helix (28), or vice versa.

5. Linear unit according to one of Claims 1 to 4, characterised in that the axial length (1) of the coarse-thread connection (28, 31) is made slightly smaller than the overtravel ($h_{rel}$) of the first carriage part (19).

6. Linear unit according to one of the preceding claims, characterised in that the pick-up position and depositing position (16) [sic] of the gripper carrier (15) are in each case fixed by an end stop (22, 23), limiting the carriage displacement, which stop extends over an end-face dimension both of the first carriage part (19) and of the second carriage part (20), in that the two carriage parts (19, 20) have the same dimensions in the direction of displacement and in that on the end face of the second carriage part (20) or on the end stop (22) confronting the said end face there is arranged a spacer (24), extending in the direction of carriage displacement and of a length fixing the relative movement ($h_{rel}$) of the carriage parts (19, 20).

## Revendications

1. Unité linéaire pour transférer des objets, notamment des pièces d'oeuvre sur des bandes de montage ou de fabrication, avec une première partie de chariot (19) susceptible de se déplacer entre une position de préhension et une position de dépôt, avec une deuxième partie de chariot (20) montée de façon à pouvoir coulisser sur la première partie du chariot (19) et couplée par friction avec celle-ci, et dans laquelle sont montés de façon à pouvoir pivoter autour d'axes verticaux, des organes de préhension (14) pour saisir les objets à transférer, avec en outre des butées (22, 23, 24) faisant saillie dans la trajectoire de la seconde partie de chariot (20) et qui raccourcissent la trajectoire de déplacement de la seconde partie de chariot (20) par rapport à celle de la première partie de chariot (19) et imposent respectivement un déplacement relatif ($h_{rel}$) de la seconde partie de chariot (20) par rapport à la première partie de chariot (19), lorsque celle-ci arrive dans la position de préhension ou dans la position de dépôt, et avec en outre, un mécanisme (27, 28, 29, 30) qui convertit le déplacement relatif ($h_{rel}$) des deux parties de chariot (19, 20) par l'intermédiaire d'un pignon denté (27) en un mouvement de pivotement horizontal, et par l'intermédiaire d'éléments de levage (28) en un mouvement de coulissement vertical des organes de préhension (14), unité linéaire caractérisée en ce que les pignons dentés (27) sont fixés à des bras de préhension verticaux (25), et pour provoquer le mouvement de pivotement horizontal (mouvement d'approche et d'ouverture) engrènent avec des crémaillères (29) disposées sur la première partie du chariot (19), et en ce qu'en outre, les mouvements de coulissement verticaux (mouvements de soulèvement et d'abaissement) des organes de préhension (14) sont assurés par une liaison à filetage rapide (28, 31) entre le bras de préhension (25) et un doigt de préhension (26) monté de façon à pouvoir tourner sur ce bras et venant en préhension dans le filetage rapide (28).

2. Unité linéaire selon la revendication 1, caractérisé en ce qu'à l'extrémité libre du bras de préhension (25) est disposée une butée (33) contre laquelle s'applique le doigt de préhension (26) sous l'action d'un ressort de rappel agissant dans le sens de l'abaissement, et en ce qu'en outre, le sens du pas du filetage rapide (28) est choisi de façon que le couple appliqué sur le doigt de préhension (26) par le ressort de rappel (35) en coopération avec le filetage rapide (28) agit dans le sens d'un déplacement relatif (mouvement d'ouverture) par rapport au bras de préhension (25) faisant pivoter le doigt de préhension (26) en l'éloignant de l'objet à saisir.

3. Unité linéaire selon la revendication 2, caractérisée en ce que le ressort de rappel revêt la forme d'un ressort de pression hélicoïdal (35) qui est placé sur le bras de préhension (25) et qui prend appui, d'une part, sur le doigt de préhension (26) et, d'autre part, sur la seconde partie (20) du chariot.

4. Unité linéaire selon une des revendications 1 à 3, caractérisée en ce que la liaison par filetage rapide est constituée par une vis sans fin à filets multiples (28) disposée sur le bras de préhension (25) et par un nombre correspondant au nombre des filets de la vis sans fin (28) de cames de glissement (31) guidées dans la vis sans fin (28) et disposées dans le doigt de préhension (26), ou inversement.

5. Unité linéaire selon une des revendications 1 à 4, caractérisée en ce que la longueur axiale (1) de la liaison à filetage rapide (28, 31) est un peu plus petite que la course excédentaire ($h_{rel}$) de la première partie (19) du chariot.

6. Unité linéaire selon une des précédentes revendications, caractérisée en ce que la position de préhension (16) et la position de dépôt (17) du support (15) des organes de préhension, sont respectivement fixées par une butée terminale (22, 23) limitant le coulissement du chariot, qui s'étend au-delà d'une dimension frontale, aussi bien de la première que de la seconde partie (19, 20) du chariot, en ce que les deux parties (19, 20) du chariot, ont les mêmes dimensions dans la direction de coulissement et en ce que, sur la face frontale de la seconde partie (20) du chariot, ou bien sur la butée terminale (22) tournée vers cette face frontale, est disposée une pièce d'écartement (24) s'étendant dans la direction de coulissement du chariot, avec une longueur fixant le déplacement relatif ($h_{rel}$) des parties (19, 20) du chariot.

Fig.1

EP 0 362 200 B1

Fig.2

Fig.3